Europäisches Patentamt

European Patent Office

Office européen des brevets

(19)

(11) Numéro de publication : **0 281 470 B1**

(12) # FASCICULE DE BREVET EUROPEEN

(45) Date de publication du fascicule du brevet :
09.10.91 Bulletin 91/41

(51) Int. Cl.⁵ : **H04B 5/00**

(21) Numéro de dépôt : **88400434.2**

(22) Date de dépôt : **25.02.88**

(54) **Dispositif inductif d'échange rapide de données entre deux supports.**

(30) Priorité : **02.03.87 FR 8702761**

(43) Date de publication de la demande :
**07.09.88 Bulletin 88/36**

(45) Mention de la délivrance du brevet :
**09.10.91 Bulletin 91/41**

(84) Etats contractants désignés :
**CH DE GB IT LI**

(56) Documents cités :
**CH-A- 563 046**
**FR-A- 2 138 470**
**GB-A- 522 420**
**GB-A- 1 127 111**

(73) Titulaire : **TELEMECANIQUE**
**43-45, Boulevard Franklin Roosevelt**
**F-92504 Rueil-Malmaison Cedex (FR)**

(72) Inventeur : **Chatelot, Denis**
**Chez Monot Transac**
**F-16110 La Roche Foucault (FR)**

(74) Mandataire : **Marquer, Francis et al**
**35, Avenue Victor Hugo**
**F-78960 Voisins le Bretonneux (FR)**

Jouve, 18, rue Saint-Denis, 75001 PARIS

## Description

La présente invention concerne un dispositif d'échange rapide de données entre deux supports, notamment entre un poste fixe et un support déplaçable, par transmission inductive de signaux logiques. Un tel dispositif est utilisable spécialement dans des systèmes d'automatisation de processus industriels.

Par le brevet CH 563046, on a déjà proposé un dispositif de transmission dont l'émetteur comprend une bobine émettrice et dont le récepteur comporte une bobine réceptrice, la transmission s'effectuant par un couplage entre ces deux bobines. Toutefois, ce système n'est pas conçu pour réaliser une fonction lecture-écriture.

Pour effectuer une transmission inductive de signaux logiques, entre un support de données déplaçable et un poste fixe de lecture et d'écriture, il est connu d'utiliser :

— un circuit résonnant relié à une source d'énergie et comportant au moins une bobine de lecture-écriture magnétiquement accouplable à une bobine correspondante du support et enroulée sur un barreau de ferrite à forte perméabilité, et une capacité accordant ledit circuit sur une fréquence déterminée ;

— un circuit d'émission et un circuit de réception de signaux logiques électriquement reliés à la bobine de lecture-écriture de manière que celle-ci soit parcourue par un courant haute fréquence modulable par lesdits signaux ;

— un circuit logique de gestion des échanges entre le poste de lecture-écriture et le support, susceptible d'être relié, d'une part, aux circuits d'émission et de réception et, d'autre part, à un système d'exploitation ; le circuit résonnant peut présenter une seule bobine de transmission fonctionnant en émission et en réception ou deux bobines de transmission dont l'une fonctionne en émission et l'autre en réception.

On a observé que la présence de pièces métalliques au voisinage du support mobile entraîne des perturbations qui risquent d'altérer l'échange de données, entre le poste fixe et le support mobile. De plus, la dispersion des valeurs des composants du circuit d'émission, notamment des condensateurs de ce circuit, peut également causer un désaccord du circuit résonnant et par suite l'apparition de signaux perturbants produisant une confusion avec les signaux utiles. Enfin, les variations de température subies par le dispositif, en particulier par le barreau de ferrite, risquent aussi d'altérer l'échange de données.

La présente invention a pour but de remédier à ces inconvénients des dispositifs connus d'échange inductif de données et cela à l'aide de moyens simples comparables à ceux utilisés dans les systèmes de contrôle automatique de fréquence utilisés dans les étages de fréquence intermédiaire des récepteurs radio, dans lesquels, comme cela est indiqué dans les brevets GB 1127111 et 522420, on fait varier l'inductance d'une bobine d'oscillateur en appliquant un courant continu sur un enroulement de cette bobine.

Pour parvenir à ce résultat, elle propose un dispositif du type décrit dans le préambule, caractérisé en ce que le circuit logique de gestion des échanges est inclus dans le poste de lecture-écriture, et en ce que ledit poste comprend :

— un circuit d'accord automatique destiné à maintenir la fréquence du circuit résonnant à une valeur nominale et comportant un comparateur de phase, ce comparateur comparant la phase $\phi$ du signal circulant dans la bobine de lecture-écriture à une valeur de consigne et délivrant en fonction de leur écart un signal d'erreur ; et

— un moyen d'accord comprenant une bobine d'accord associée au circuit magnétique de la bobine de transmission et parcourue par un courant continu image du signal d'erreur de manière à superposer au champ magnétique haute fréquence, un champ magnétique continu de correction ramenant la fréquence propre du circuit résonnant à sa valeur nominale.

Le courant continu, appliqué à la bobine d'accord, peut être généré par un amplificateur d'asservissement relié à un comparateur de phase. On réalise ainsi de manière simple l'accord automatique recherché.

L'échange de données entre le support par exemple mobile et le poste de lecture-écriture par exemple fixe qui contient le circuit résonnant, les circuits d'émission et de réception et le circuit logique de gestion est dès lors amélioré. On peut par voie de conséquence effectuer sans inconvénient un échange rapide et fiable de données avec un système d'exploitation tel qu'un automate programmable ou autre système de gestion d'un processus industriel.

Dans un mode de réalisation extrêmement simple, le circuit magnétique est avantageusement commun à la bobine de transmission et à la bobine d'accord et comporte pour la bobine de transmission un barreau de ferrite ou analogue et pour la bobine d'accord un noyau en U en fer doux ou analogue ; les extrémités des branches du noyau en U adjacentes au barreau sont de préférence entourées par des bagues électriquement conductrices formant un écran pour le champ magnétique à haute fréquence.

D'autres caractéristiques et avantages de l'invention apparaîtront à la lecture de la description faite ci-après d'un mode de réalisation non limitatif.

La figure 1 est un schéma synoptique illustrant une forme d'exécution d'un dispositif d'échange de données en milieu industriel conforme à l'invention ;

La figure 2 est un schéma synoptique représentant les circuits d'émission, de réception et d'accord du dispositif de la figure 1 ;

La figure 3 montre un mode de réalisation préférentiel du moyen d'accord automatique.

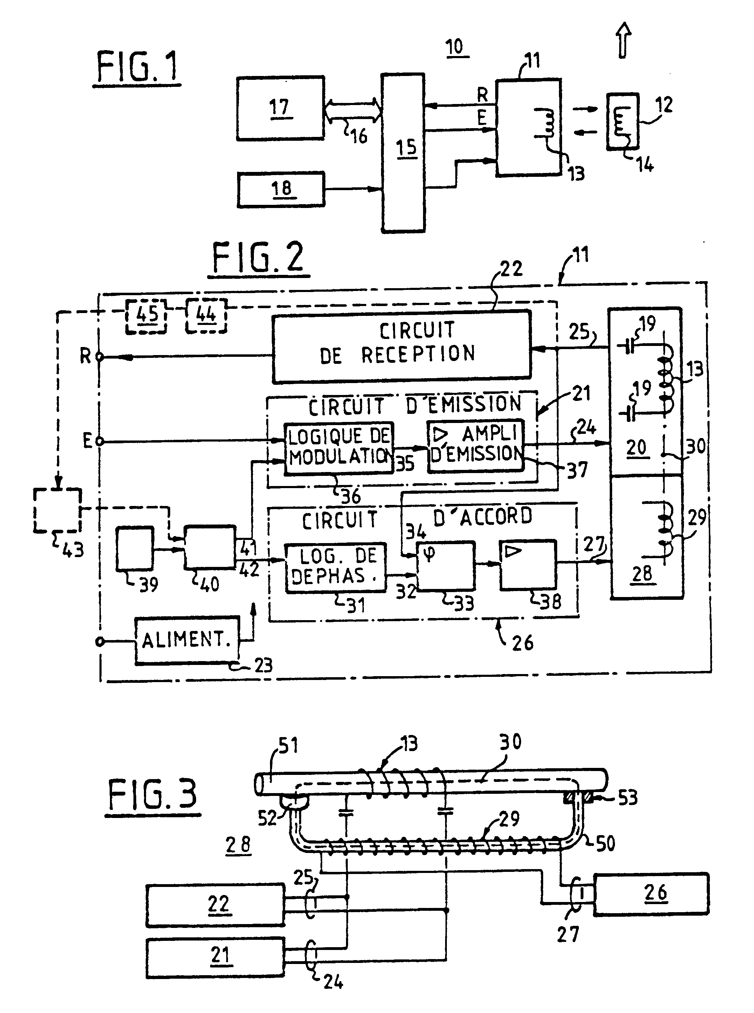

Le dispositif 10 d'échange de données de la figure 1 comporte un poste 11 de lecture-écriture et un support de données 12 lié à un mobile, par exemple à une palette portant un produit en cours de traitement dans un processus de fabrication.

Il va de soi que le support 12 peut également être porté par une personne ou un animal. L'échange de données doit s'effectuer par transmission inductive bidirectionnelle de signaux logiques entre une bobine de transmission 13 du poste 11 et une bobine de transmission 14 du support 12 de manière à lire et écrire des données dans celui-ci. Les bobines de transmission 13, 14 sont des bobines d'émission-réception, mais l'une ou l'autre pourrait être remplacée par une bobine d'émission et une bobine de réception.

Le support comprend des circuits d'émission et de réception accouplables à un circuit résonnant dont fait partie la bobine 14 ; il comprend aussi une logique interposée entre les circuits d'émission et de réception et une mémoire de données ou autre organe numérique de mémorisation à lecture et écriture, ainsi qu'une alimentation. L'alimentation peut être autonome ; elle utilise présentement l'énergie reçue du poste 11 via la liaison inductive.

Le poste de lecture-écriture est relié par l'intermédiaire de lignes d'émission et de réception à un contrôleur ou un interface 15 lui-même relié via un bus 16 à un système d'exploitation 17 par exemple constitué par un automate programmable. Une source d'énergie 18 alimente l'interface 15, le poste de lecture-écriture 11 et, via la liaison inductive, le support de données 14.

Le contrôleur 15 est un circuit logique de gestion de l'échange. Il dialogue avec le système d'exploitation, de manière d'une part à interpréter les ordres donnés par celui-ci et à les transmettre au support mobile 12 par l'intermédiaire du poste de lecture-écriture 11, d'autre part à répondre au système d'exploitation en fonction des données lues dans le support 12 par le poste 11. Le contrôleur 15 réitère les messages en cas d'erreur de transmission. Certains des organes présentement décrits comme appartenant au poste 11 peuvent être disposés dans le contrôleur 15.

Comme on le voit plus en détail sur la figure 2, le poste de lecture-écriture 11 comprend un circuit résonnant 20, un circuit d'émission 21 et un circuit de réception 22 pour les signaux logiques échangés avec le support mobile 12, ainsi qu'une alimentation 23 reliée à la source d'énergie 18 alimentant les divers circuits.

Le circuit résonnant 20 comprend la bobine 13 et au moins une capacité 19 et il est relié par des conducteurs 24, 25 aux circuits respectifs 21, 22. Selon l'invention, le poste 11 présente un circuit d'accord automatique 26. Le circuit d'accord 26 est destiné à maintenir la fréquence du circuit résonnant à une valeur nominale et il est relié par une liaison 27 à un moyen d'accord 28 comprenant une bobine 29 associée au circuit magnétique 30 de la bobine de transmission 13.

Le circuit d'accord 26 comporte une logique de déphasage 31 reliée à une première entrée 32 d'un comparateur de phase 33 dont une deuxième entrée 34 est reliée à la bobine 13 par exemple via le conducteur 25. Une logique de modulation 36 fait partie du circuit d'émission 21. La sortie 35 de la logique 36 est reliée à un amplificateur d'émission 37 dont la sortie est reliée au conducteur 24. La sortie continue du comparateur de phase 33 est reliée à un amplificateur d'asservissement 38 dont la sortie est couplée au circuit résonnant 20 via le conducteur 27.

Il convient de noter que le poste de lecture-écriture 11 présente de plus une horloge formée d'un oscillateur à quartz 39 relié à un diviseur de fréquence 40 dont les sorties 41, 42 pilotent respectivement la logique de modulation 36 et la logique de déphasage 31. Dans une variante illustrée en tirets sur la figure 2, l'horloge peut être constituée par un générateur de fréquence 43 inclus dans le contrôleur et relié à la bobine 13 par l'intermédiaire d'un dispositif 44 de mesure de la fréquence reçue et d'une mémoire 45, afin de s'adapter à la fréquence du support.

La figure 3 illustre un mode de réalisation préféré du moyen d'accord 28 relié par la liaison 27 au circuit d'accord 26. La bobine 29 du moyen d'accord 28 est enroulée sur un noyau constitué par un élément 50 en U en fer doux ou analogue, tandis que la bobine 13 du circuit résonnant est enroulée sur un barreau de ferrite 51. Les extrémités des branches de l'élément en U 50 sont adjacentes au barreau 51 de manière à fermer le circuit magnétique 30 et sont entourées par des bagues 52, 53 électriquement conductrices, par exemple en cuivre, et formant un écran pour le champ magnétique haute fréquence.

La logique de déphasage 31 comprend un circuit déphaseur qui permet d'ajuster la valeur de consigne appliquée à l'entrée 32 du comparateur de phase 33, de façon que le signal de sortie du comparateur soit nul en cas d'accord.

Le dispositif représenté sur les figures fonctionne de la manière suivante lorsque le support mobile 12 est arrêté ou passe au voisinage du poste 11. Lorsque le fonctionnement en émission est ordonné par le contrôleur 15, le système d'exploitation 17 émet des instructions via le bus 16. Le contrôleur 15 émet alors vers la borne E du poste de lecture-écriture 11 une suite de signaux logiques. Ces signaux sont traités par la logique de modulation 36 pour moduler une fréquence porteuse par exemple de fréquence nominale F = 895 kHz délivrée par la sortie 41 du diviseur de fréquence 40 ; la porteuse modulée est amplifiée par l'amplificateur 37 et le circuit résonnant 20 génère un champ magnétique modulé à haute fréquence. Le couplage magnétique entre la bobine 13 du poste fixe et la bobine 14 du support mobile 12 détermine dans le circuit résonnant dudit support une porteuse modulée convenablement démodulée et traitée par le support 12 pour mémoriser dans celui-ci les données souhaitées.

Lorsque le fonctionnement en mode réception est ordonné par le contrôleur 15, le champ magnétique à haute fréquence apparaissant par suite de la proximité du support 12 induit dans la bobine 13 un courant qui est démodulé et traité par le circuit 22 pour générer à la borne R du poste 11 une suite de signaux logiques retransmise par le contrôleur 15 au système d'exploitation 17.

Si la fréquence du circuit résonnant 20 s'écarte de la valeur nominale F, le signal à l'entrée 34 du comparateur de phase 33 s'écarte du déphasage fixe fourni à l'entrée 32 par le déphaseur de la logique 31. Il en résulte à la sortie du comparateur un signal continu d'erreur amplifié par l'amplificateur 38 pour alimenter la bobine d'accord 29 ; cette dernière induit un champ magnétique continu dans le noyau en fer doux 50. Ce champ magnétique continu peut ainsi être superposé au champ alternatif dans le barreau 30 et au voisinage de celui-ci, de sorte que la fréquence du circuit résonnant est ramenée à sa valeur nominale.

Dans un autre mode de réalisation non représenté de l'invention, on substitue au comparateur de phase un comparateur de fréquence qui compare la fréquence du circuit résonnant à une fréquence de consigne.

**Revendications**

1. Dispositif d'échange de données entre un poste (11) de lecture-écriture et un support (12) de données déplaçable par transmission inductive de signaux logiques, le dispositif comprenant :
   — un circuit résonnant (20) relié à une source d'énergie (18) et comportant au moins une bobine de lecture-écriture (13) magnétiquement accouplable à une bobine correspondante (14) du support et enroulée sur un barreau à forte perméabilité, et une capacité accordant ledit circuit sur une fréquence déterminée ;
   — un circuit d'émission (21) et un circuit de réception (22) de signaux électriquement reliés à la bobine de lecture-écriture de manière que le courant haute fréquence parcourant celle-ci soit modulable par lesdits signaux ;
   — un circuit logique (15) de gestion des échanges entre le poste de lecture-écriture et le support, susceptible d'être relié, d'une part, aux circuits d'émission et de réception et, d'autre part, à un système d'exploitation (17),
   caractérisé en ce que ledit circuit logique (15) de gestion des échanges est inclus dans le poste de lecture-écriture (11), et en ce qu'il comporte :
   — un circuit d'accord automatique (26) destiné à maintenir la fréquence du circuit résonnant à une valeur nominale (F) et comportant un comparateur de phase (33), ce comparateur comparant la phase φ du signal circulant dans la bobine de lecture-écriture (13) à une valeur de consigne et délivrant en fonction de leur écart un signal d'erreur ; et
   — un moyen d'accord (28) comprenant une bobine d'accord (29) associée au circuit magnétique (30) de la bobine de lecture-écriture (13) et parcourue par un courant continu image du signal d'erreur, de manière à superposer au champ magnétique haute fréquence un champ magnétique continu de correction ramenant la fréquence propre du circuit résonnant à sa valeur nominale.

2. Dispositif selon la revendication 1, caractérisé par le fait que le circuit magnétique (30) est commun à la bobine de lecture-écriture (13) et à la bobine d'accord (29).

3. Dispositif selon la revendication 2, caractérisé par le fait que le circuit magnétique commun (30) comporte :
   — pour la bobine de lecture-écriture (13) un noyau constitué par un barreau (51) de ferrite ou analogue ;
   — pour la bobine d'accord (29) un noyau constitué par un élément en U (50) en fer doux ou analogue ;
   — les extrémités des branches de l'élément en U (50) étant adjacentes au barreau et étant entourées par des bagues (52, 53) électriquement conductrices formant un écran pour le champ magnétique à haute fréquence.

4. Dispositif selon l'une des revendications 1 à 3, caractérisé en ce que la première entrée (32) du comparateur de phase (33) est reliée à une logique de déphasage (31) qui présente un circuit déphaseur permettant d'ajuster la valeur de consigne pour que le signal de sortie du comparateur de phase soit nul en cas d'accord, et en ce qu'un amplificateur d'asservissement (38) amplifie le signal de sortie du comparateur de phase (33), le signal amplifié étant appliqué à la bobine d'accord (29).

5. Dispositif selon la revendication 3, caractérisé par le fait qu'un générateur de fréquence (39 ; 43) est relié par l'intermédiaire d'un diviseur de fréquence (40), d'une part, à la logique de déphasage (31) du circuit d'accord (26) et, d'autre part, à une logique de modulation (36) du circuit d'émission (21).

6. Dispositif selon la revendication 5, caractérisé par le fait que le générateur de fréquence (43) est relié à la bobine de lecture-écriture (13) via un dispositif (44) de mesure de la fréquence de réception et une mémoire (45) de manière à adapter la consigne appliquée au comparateur de phase à la fréquence du signal émis par le support.

**Patentansprüche**

1. Vorrichtung zum Datenaustausch zwischen einer Lese-Schreibstation (11) und einem beweglichen Datenträger (12), durch induktive Übermittlung logischer Signale, wobei besagte Vorrichtung aufweist :

— einen an eine Stromquelle (18) angeschlossenen Resonanzkreis (20), mit mindestens einer Lese-Schreibspule (13), die magnetisch mit einer entsprechenden Spule (14) des Datenträgers gekuppelt und um einen Ferritstab mit hoher Durchlässigkeit gewunden ist, sowie einem C-glied, welches besagten Schaltkreis auf eine bestimmte Frequenz abstimmt ;

— einen Signalsendekreis (21) und einen Signalempfangskreis (22), die elektrisch an die Lese-Schreibspule angeschlossen sind, sodass der Hochfrequenzstrom in dieser durch besagte Signale moduliert werden kann ;

— eine logische Schaltung (15) zur Steuerung des Datenaustausches zwischen der Lese-Schreibstation und dem Datenträger, die einerseits an die Sende- und Empfangskreise angeschlossen werden kann und andererseits an ein Benutzersystem (17),

dadurch gekennzeichnet, dass besagte logische Schaltung (15) zur Austauschsteuerung in der Lese-Schreibstation (11) enthalten ist und aufweist :

— eine automatische Abstimmschaltung (26), welche die Frequenz des Resonanzkreises auf einem Nominalwert (F) hält und einen Phasenvergleicher (33) aufweist, wobei besagter Vergleicher die Phase $\phi$ des in der Lese-Schreibspule (13) zirkulierenden Signals mit einem Referenzwert vergleicht und ein dem Unterschied entsprechendes Fehlersignal abgibt ; und

— ein Abstimmittel (28) mit einer Abstimmspule (29), die dem Magnetkreis (30) der Lese-Schreibspule (13) zugeordnet ist und durch die ein Gleichstrom, welcher das Abbild des Fehlersignals ist, fliesst, um auf diese Weise das Hochfrequenzmagnetfeld durch ein Korrekturgleichstrommagnetfeld zu überdecken und die Frequenz des Renonanzkreises auf ihren Nominalwert zurückzubringen.

2. Vorrichtung nach Anspruch 1, dadurch gekennzeichnet, dass der Magnetkreis (30) der Lese-Schreibspule (13) und der Abstimmspule (29) gemeinsam ist.

3. Vorrichtung nach Anspruch 2, dadurch gekennzeichnet, dass der gemeinsame Magnetkreis (30) aufweist :

— für die Lese-Schreibspule (13) einen von einem Ferritstab (51) oder ähnlichem gebildeten Kern ;

— für die Abstimmspule (29), einen von einem U-förmigen Element (50) aus Weicheisen oder ählichem gebildeten Kern ;

— wobei die Enden der Schenkel des U-förmigen Elementes (50) dem Stab benachbart und von elektrisch leitenden Ringen (52, 53) umgeben sind, welche einen Schirm für das Hochfrequenzmagnetfeld bilden.

4. Vorrichtung nach einem der Ansprüche 1 bis 3, dadurch gekennzeichnet, dass der erste Eingang (32) des Phasenvergleichers (33) an eine Phasenverschiebungslogik (31) angeschlossen ist, welche eine Phasenverschiebungsschaltung aufweist, die es ermöglicht, den Referenzwert so einzustellen, dass das Ausgangssignal des Phasenvergleichers im Falle von Übereinstimmung gleich null ist, und dass ein Funktionsverstärker (38) das Ausgangssignal des Phasenvergleichers (33) verstärkt und das verstärkte Signal an die Abstimmspule (29) angelegt wird.

5. Vorrichtung nach Anspruch 3, dadurch gekennzeichnet, dass ein Frequenzerzeuger (39 ; 43) mittels eines Frequenzteilers (40) einerseits an die Phasenverschiebungslogik (31) der Abstimmungsschaltung (26) und andererseits an eine Modulierlogik (36) des Sendekreises (21) angeschlossen ist.

6. Vorrichtung nach Anspruch 5, dadurch gekennzeichnet, dass der Frequenzerzeuger (43) an die Lese-Schreibspule (13) mittels einer Vorrichtung (44) zur Messung der Empfangsfrequenz und eines Speichers (45) angeschlossen ist, um den an den Phasenvergleicher angelegten Referenzwert an die Frequenz des vom Datenträger abgegebenen Signals anzupassen.

**Claims**

1. A device for the rapid exchange of data between a reading-writing station (11) and a movable data carrier (12) by the inductive transmission of logic signals, said device comprising :

— a resonating circuit (20) connected to an energy source (18) and comprising at least one reading-writing coil (13) which can be magnetically coupled to a corresponding coil (14) of the data carrier and wound on a high permeability bar, and a capacitor tuning said circuit to a given frequency ;

— a circuit (21) for transmitting and a circuit (22) for receiving signals, electrically connected to the reading-writing coil so that this latter has passing therethrough a high frequency current which can be modulated by said signals ;

— a logic circuit (15) for controlling the exchange between the reading-writing station and the data carrier, connectable on the one hand to the transmission and reception circuits and on the other to a user system (17),

characterized in that said logic circuit (15) for controlling the exchange is included in the reading-writing station (11) and in that it comprises :

— an automatic tuning circuit (26) for maintaining the frequency of the resonating circuit at a nominal value (F) and including a phase comparator (33), this comparator comparing the phase $\phi$ of the signal passing through the reading-writing coil (13) with a reference value and delivering an error signal as a function of their difference ; and

— a tuning means (28), comprising a tuning coil (29) associated with the magnetic circuit (30) of the reading-writing coil (13) and having flowing therethrough a DC current which is the image of the error signal, so as to superimpose on the high frequency magnetic field a DC corrective magnetic field, so as to cause the frequency of the resonating circuit to come back to its nominal value.

2. The device as claimed in claim 1, characterized in that said magnetic circuit (30) is common to the reading-writing coil (13) and to the tuning coil (29).

3. The device as claimed in claim 2, characterized in that said common magnetic circuit (30) includes :

— for the reading-writing coil (13), a core formed by a ferrite bar (51) or similar ;

— for the tuning coil (29), a core formed by a soft iron U shaped element (50) or similar ;

— the ends of the legs of the U shaped element (50) being adjacent the bar and surrounded by electrically conducting rings (52, 53) forming a screen for the high frequency magnetic field.

4. The device as claimed in one of claims 1 to 3, characterized in that the first input (32) of the phase comparator (33) is connected to a phase shift logic (31) which has a phase shift circuit for adjusting the reference value so that the output signal of the phase comparator is zero in the case of correct tuning, and in that a servo-amplifier (38) amplifies the output signal of the phase comparator (33), the amplified signal being applied to the tuning coil (29).

5. The device as claimed in claim 3, characterized in that a frequency generator (39, 43) is connected via a frequency divider (40) on the one hand to the phase shift logic (31) of the tuning circuit (26) and, on the other hand, to a modulation logic (36) of the transmission circuit (21).

6. The device as claimed in claim 5, characterized in that the frequency generator (43) is connected to the reading-writing coil (13) via a device (44) for measuring the reception frequency and a memory (45), so as to adapt the reference value applied to the phase comparator to the frequency of the signal transmitted by the data carrier.

# FIG.1

# FIG.2

CIRCUIT DE RECEPTION

CIRCUIT D'EMISSION

LOGIQUE DE MODULATION

AMPLI D'EMISSION

CIRCUIT D'ACCORD

LOG. DE DEPHAS.

ALIMENT.

# FIG.3